# EUROPEAN PATENT APPLICATION

(11) **EP 1 710 127 A1**
(43) Date of publication of application: **11.10.2006**
(21) Application number: 04807232.6
(22) Date of filing: 17.12.2004
(51) Int. Cl.: B60R 16/02, B60K 31/00, G08G 1/16

(54) **VEHICLE INFORMATION PROVIDING DEVICE**

(30) Priority: 16.01.2004 JP 2004008611
(71) Applicant: NIPPON SEIKI CO., LTD., Nagaoka-shi, Niigata 940-8580 (JP)
(72) Inventor: TAMURA, Shigeaki Nippon Seiki Co., Ltd., Niigata (JP)
(74) Representative: Jackson, Richard Eric
(86) International application number: PCT/JP2004/018874
(87) International publication number: WO 2005/068261

(57) **Abstract**

The invention provides an information providing apparatus for a vehicle which can reduce the movement of the line of sight of the user during driving by using an aural information providing unit. A subject information providing apparatus 100 for a vehicle includes an aural information providing unit 240 to aurally notify various states of a vehicle. A control unit 202 inputs traveling information relating to automatic traveling of the vehicle and operation information relating to the automatic traveling for a user through at least one of a vehicle information terminal 212 and a multiplex communication input/output unit 213, and activates the aural information providing unit 240 to notify at least one state of a guidance relating to the automatic traveling, a warning relating to the automatic traveling, and an answerback relating to the operation information.

## Description

### [Technical Field]

The present invention relates to an information providing apparatus for a vehicle, and particularly to an information providing apparatus for a vehicle which includes an aural information providing unit and can support automatic traveling, such as auto-cruse traveling, of the vehicle by notifying aural information from the aural information providing unit.

### [Background Art]

As an information providing apparatus for a vehicle, there is one that uses a navigation apparatus and outputs various informations relating to an input mode, a set point and the like by voice when an objective point is set or an auto-cruse traveling section of the vehicle is set, which is disclosed in patent document 1. Besides, in an information providing apparatus for a vehicle using voice, there is one that includes an audio mute unit to reduce the voice output of an audio equipment at the time of output of a warning message, which is disclosed in patent document 2. Further, in an information providing apparatus for a vehicle, there is one that changes an expression mode such as a tone color in voice synthesis, which is disclosed in patent document 3.
[Patent document 1] JP-A-11-99851
[Patent document 2] JP-A-9-73588
[Patent document 3] JP-A-11-224095

### [Disclosure of the Invention]

### [Problems that the Invention is to Solve]

In the information providing apparatus for the vehicle disclosed in patent document 1, although the operability of an operation part of auto-cruse traveling is improved by the voice output, there has been room for improvement in the notification processing of a traveling state to a user (especially a driver) in the automatic traveling such as auto-cruse traveling. Since the information providing apparatus for the vehicle disclosed in patent document 2 has the structure including the audio mute unit, the driver certainly hear the warning message and can perform a suitable processing, however, there has been room for improvement in the customize registration of aural information according to the user's preference. Besides, in the information providing apparatus for the vehicle disclosed in patent document 3, the understanding of the user on the information is deepened and the convenience is enhanced by changing the reproduced voice, however, similarly to patent document 2, there has been room for improvement in the customize registration of aural information according to the user's preference.

Taking the foregoing problems into consideration, in an information providing apparatus for a vehicle including an aural information providing unit to aurally notify various states of a vehicle, the invention enables the aural information providing unit whose mounting rate becomes high after now to be applied to automatic traveling such as auto-cruse traveling, enables the provision of the information providing apparatus for the vehicle according to the user's preference by using a customize function of the aural information providing unit, and provides the information providing apparatus for the vehicle in which the movement of the line of sight of the user during traveling can be reduced by using the aural information providing unit.

### [Means for Solving the Problems]

In order to solve the foregoing problems, as recited in an information providing apparatus for a vehicle recited in claim 1, the invention is an information providing apparatus for a vehicle including an aural information providing unit to aurally notify various states of a vehicle, and a control unit that inputs traveling information relating to automatic traveling of the vehicle and operation information relating to the automatic traveling for a user through at least one of a vehicle information terminal and a multiplex communication input/output unit, and activates the aural information providing unit to notify at least one state of a vehicle state relating to the automatic traveling, a warning relating to the automatic traveling, a guidance of an operation relating to the automatic traveling, and an answerback of the operation relating to the automatic traveling.

Besides, according to an information providing apparatus for a vehicle as recited in claim 2, in the information providing apparatus for the vehicle as recited in claim 1, there is provided a visual information providing unit to visually display the various states of the vehicle, and the control unit causes a display mode relating to notification content of the aural information providing unit to be displayed by the visual information providing unit.

Besides, according to an information providing apparatus for a vehicle as recited in claim 3, in the information providing apparatus for the vehicle as recited in claim 1, the control unit uses the aural information providing unit to send a notification by voice.

Besides, according to an information providing apparatus for a vehicle as recited in claim 4, in the information providing apparatus for the vehicle as recited in claim 1, the control unit uses the aural information providing unit to send a notification by a combination of a voice and a sound effect.

Besides, according to an information providing apparatus for a vehicle as recited in claim 5, in the information providing apparatus for the vehicle as recited in claim 4, the control unit activates the aural information providing unit to give the sound effect according to various states of the guidance, the warning and the answerback, and changes the sound effect for each of the various states.

Besides, as recited in an information providing apparatus for a vehicle recited in claim 6, an information providing apparatus for a vehicle of the invention is an information providing apparatus for a vehicle including an aural information providing unit to aurally notify various states of a vehicle, and the control unit inputs information of the vehicle through at least one of a vehicle information terminal and a multiplex communication input/output unit, activates the aural information providing unit for at least warning content in the information by a combination of a sound effect and a voice, and changes the sound effect for each warning content.

Besides, according to an information providing apparatus for a vehicle as recited in claim 7, in the information providing apparatus for the vehicle as recited in claim 6, the control unit repeatedly activates the aural information providing unit for the warning content by the combination of the sound effect and the voice, and activates the aural information providing unit by only the sound effect in the repeated operation after a specified number of times.

Besides, as recited in an information providing apparatus for a vehicle recited in claim 8, an information providing apparatus for a vehicle of the invention is an information providing apparatus for a vehicle including an aural information providing unit to aurally notify various states of a vehicle, and a control unit that inputs information of the vehicle through at least one of a vehicle information terminal and a multiplex communication input/output unit, and activates the aural information providing unit to notify content of at least one of an opening and an ending based on the information.

Besides, according to an information providing apparatus for a vehicle as recited in claim 9, in the information providing apparatus for the vehicle as recited in claim 8, the control unit activates the aural information providing unit by mixing of a voice and a music.

Besides, according to an information providing apparatus for a vehicle as recited in claim 10, in the information providing apparatus for the vehicle as recited in claim 6 or 8, the control unit activates the visual information providing unit as well as the aural information providing unit.

Besides, as recited in an information providing apparatus for a vehicle recited in claim 11, an information providing apparatus for a vehicle of the invention includes a visual information providing unit to visually display various states of a vehicle, an aural information providing unit to aurally notify the various states, and a control unit to control the visual information providing unit and the aural information providing unit, in which the control unit inputs information of the vehicle through at least one of a vehicle information terminal and a multiplex communication input/output unit, activates the aural information providing unit about information relating to at least warning content in the information, and activates the visual information providing unit as well as the aural information providing unit.

Besides, according to an information providing apparatus for a vehicle as recited in claim 12, in the information providing apparatus for the vehicle as recited in any one of claims 1, 6, 8 and 11, there is provided a time information getting unit to get time information, and the control unit inputs the time information, and notifies information corresponding to the time information by the aural information providing unit.

Besides, according to an information providing apparatus for a vehicle as recited in claim 13, in the information providing apparatus for the vehicle as recited in claim 12, the time information getting unit includes an electric wave clock or a GPS.

Besides, according to an information providing apparatus for a vehicle as recited in claim 14, in the information providing apparatus for the vehicle as recited in any one of claims 1, 6, 8 and 11, when activating the aural information providing unit, the control unit outputs an instruction signal to reduce output of an audio device mounted in the vehicle through at least one of the vehicle information terminal and the multiplex communication input/output terminal.

Besides, according to an information providing apparatus for a vehicle as recited in claim 15, in the information providing apparatus for the vehicle as recited in any one of claims 1, 6, 8 and 11, when detecting plural conditions for aural notification through at least one of the vehicle information terminal and the multiplex communication input/output terminal, the control unit activates the aural information providing unit to sequentially notify respective informations corresponding to the respective conditions in a previously determined descending order of priority.

Besides, according to an information providing apparatus for a vehicle as recited in claim 16, in the information providing apparatus for the vehicle as recited in claim 15, when a signal indicating that information on a waiting list is cancelled is inputted through at least one of the vehicle information terminal and the multiplex communication input/output terminal at the time when the informations are sequentially notified in the descending order of priority, the control unit cancels the notification operation of the information corresponding to this signal.

Besides, according to an information providing apparatus for a vehicle as recited in claim 17, in the information providing apparatus for the vehicle as recited in claim 15 or 16, when the plural informations are sequentially notified in accordance with the priority, in a case where the number of informations not notified and being on a waiting list is larger than a specified number, the control unit leaves a specified number of informations having high priority as they are and omits a notification operation of the other information.

Besides, according to an information providing apparatus for a vehicle as recited in claim 18, in the information providing apparatus for the vehicle as recited in any one of claims 15, 16 and 17, when information requiring urgency is inputted through at least one of the vehicle information terminal and the multiplex communication input/output terminal at the time when the plural informations are sequentially notified in accordance with the priority, the control unit forces the information requiring the urgency into the informations not notified and being on a waiting list, and causes the information requiring the urgency to be notified with priority by the aural information providing unit.

Besides, according to an information providing apparatus for a vehicle as recited in claim 19, in the information providing apparatus for the vehicle as recited in any one of claims 1, 6, 8 and 11, the control unit has a customize mode to register various settings of the aural information providing unit, and includes an input unit to determine contents of the various settings in the customize mode, and a storage unit to register the contents of the various settings.

### [Effects of the Invention]

According to the invention, in the information providing apparatus for the vehicle using the aural information providing unit, since the notification of the traveling state of the vehicle and the warning (alarm) output are performed by voice, the situation judgment at the time of automatic traveling, such as auto-cruse traveling, can be easily made, and the movement of the line of sight performed by the user to confirm the display information during driving can be reduced, and the information providing apparatus for the vehicle which contributes to the safety driving can be obtained. Besides, since the guidance relating to the operation of automatic traveling, such as auto-cruse traveling, and the answerback are outputted by voice, the operability for the user can be improved. Further, since it becomes possible to customize various setting contents for each user, the various settings according to the user's preference become possible, and the convenience can be improved.

### [Brief Description of the Drawings]

Fig. 1 is a schematic view showing an information providing apparatus for a vehicle in an embodiment of the invention.
Fig. 2 is a block diagram of the information providing apparatus for the vehicle in the embodiment.
Fig. 3 is a view showing an operation of an aural information providing unit and a visual information providing unit in the embodiment.
Fig. 4 is a view showing warning information in the embodiment.
Fig. 5 is a view showing an operation at a time of opening/ending in the embodiment.
Fig. 6 is a view showing mixing in the embodiment.
Fig. 7 is a view showing a processing when aural information overlaps in the embodiment.
Fig. 8 is a view showing a first processing when warning information occurs in the embodiment.
Fig. 9 is a view showing a second processing when warning information occurs in the embodiment.
Fig. 10 is a view showing a third processing when warning information occurs in the embodiment.
Fig. 11 is a view showing a priority processing in the embodiment.
Fig. 12 is a view showing a processing in a case having urgency in the embodiment.
Fig. 13 is a view showing a customize mode in the embodiment.

### [Best Mode for Carrying Out the Invention]

Hereinafter, embodiments of the invention will be described with reference to the accompanying drawings.

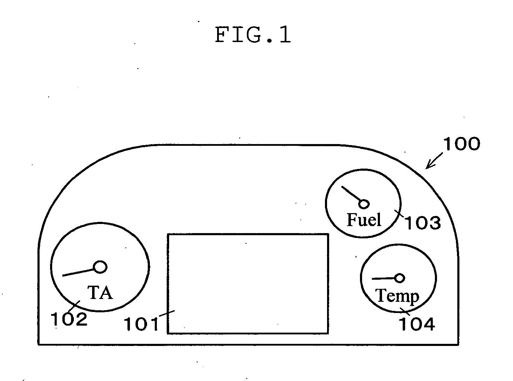

Fig. 1 is a schematic view of an example of an information providing apparatus for a vehicle. An information providing apparatus 100 for a vehicle includes a display part 101 (using, for example, a liquid crystal display device (LCD) of TFT or the like) as a visual information providing unit to perform various information displays, a tachometer 102, a fuel meter 103 and a thermometer 104.

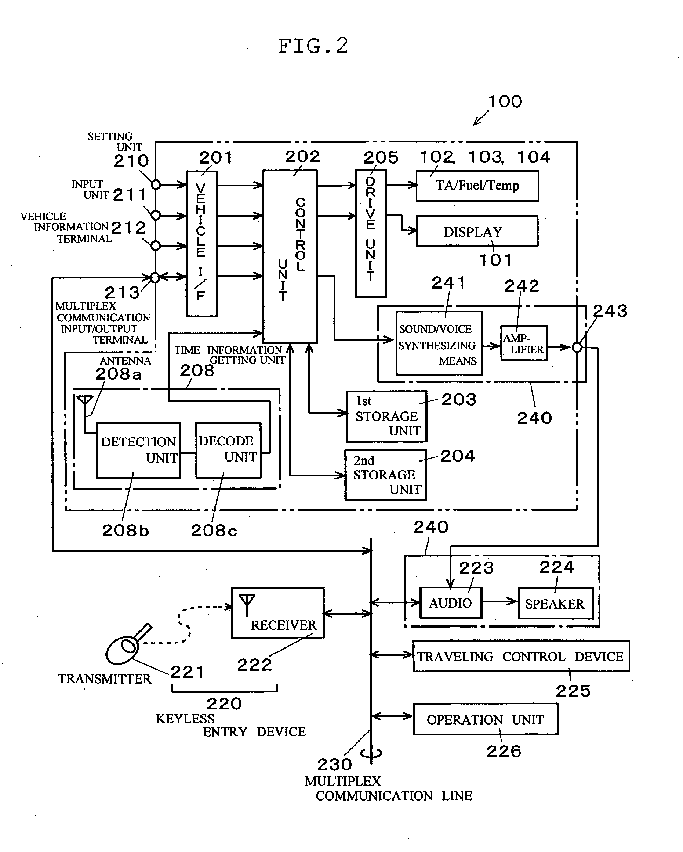

Fig. 2 is a block diagram of the information providing apparatus 100 for the vehicle of Fig. 1. The structure thereof includes a customize mode setting unit (terminal) 210 to shift the information providing apparatus 100 for the vehicle into a customize mode, an input unit 211 to set various setting contents in the execution of the customize mode, a vehicle information terminal 212 and a multiplex communication input/output terminal (multiplex communication input/output unit) 213 that perform input/output of vehicle information, a vehicle interface (I/F) unit 201, a control unit 202 to perform the control of the information providing apparatus 100 for the vehicle, a first storage unit 203 including a ROM in which a processing program of the control unit 202 is stored and the like, a second storage unit 204 including a nonvolatile memory, such as an EEPROM, to enable various settings set by the input unit 211 to be registered for each user, a display part 101 to visually display various informations, a drive unit 205 functioning as both a display control of the display part 101 and a drive control of various analog (dial type) meters 102, 103 and 104, and an aural information providing unit 240 including a speaker and for aurally notifying various informations. The aural information providing unit 240 in this embodiment includes a sound/voice synthesizing unit (with a mixing function) 241 to reproduce sound/voice, an amplifier 242, an output terminal 243, an audio (audio device) 223 and a speaker 224. Besides, a time information getting unit 208 to get time information is connected to the control unit 202. The time information getting unit 208 is an electric wave clock including an antenna 208a, a detection unit 208b and a decode unit 208c.

In the information providing apparatus 100 for the vehicle, a transmitter 221 and a receiver 222 of a keyless entry device 220 as a user identification unit, the audio 223, a traveling control device 225 to perform an automatic drive control of auto-cruise traveling, lane-keep traveling or the like, and an operation unit 226 including an operation switch of the traveling control device 225 are connected through a multiplex communication line 230. Incidentally, the control unit 202 can output an instruction signal to perform a volume mute instruction to the audio 223 through the multiplex communication input/output terminal 213 and the multiplex communication line 230.

Next, the operation of the information providing apparatus 100 for the vehicle will be described. The control unit 202 obtains a vehicle state relating to automatic traveling such as auto-cruise traveling or lane-keep traveling, warning information, and operation information relating to the operation of the auto-cruise traveling or lane-keep traveling from the vehicle information terminal 212 and the multiplex communication input/output terminal 213 that perform the input/output of various vehicle informations, notifies the vehicle state relating to the automatic traveling such as the auto-cruise traveling or lane-keep traveling, the warning output, the guidance relating to the operation of the auto-cruise traveling or lane-keep traveling, and the answerback based on the various informations through the aural information providing unit 240 by a sound effect and a voice, and causes a display mode relating to the notification content of the aural information providing unit 240 to be displayed by the display part 101. Here, although the speaker 224 for the audio 223 is used, a speaker used only for the aural information providing unit 240 may be provided. Incidentally, the guidance is for notifying, for example, the operation explanation when the customize registration is performed by operating the input unit 211, and the answerback is for responding to, for example, the setting condition of the automatic traveling, which is set by the operation unit 226 and is inputted through the multiplex communication input/output terminal 213, based on the operation of the operation unit 226 by voice.

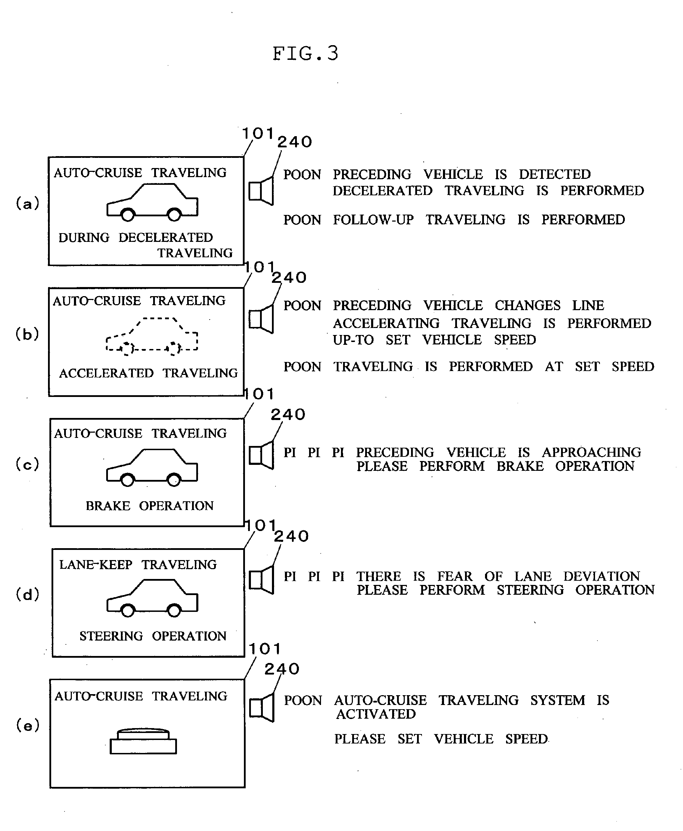

Figs. 3(a) to 3(e) show specific examples of sound effects and voices by the aural information providing unit 240 and display modes (images) by the display part 101.

Fig. 3 (a) shows a state of a preceding vehicle at a time of auto-cruse traveling. At the same time as the time when the traveling control device 225 performs the automatic traveling setting based on the specified operation of the operation unit 226, or after the automatic traveling setting is performed, when a signal indicating that the preceding vehicle is detected at the time of the auto-cruise traveling is inputted through the multiplex communication line 230 and the multiplex communication input/output terminal 213, the control unit 202 controls the aural information providing unit 240 so as to output "Preceding vehicle is detected" by voice after a sound effect "poon". Next, when a signal indicating that the vehicle is decelerated from the set speed to the speed of the preceding vehicle is inputted from the traveling control device 225 through the multiplex communication line 230 and the multiplex communication input/output terminal 213, the control unit 202 controls the aural information providing unit 240 so as to output "Decelerated traveling is performed" by voice. After that, when a signal indicating that the vehicle performs follow-up traveling according to the speed of the preceding vehicle is inputted from the traveling control device 225 through the multiplex communication line 230 and the multiplex communication input/output terminal 213, the control unit 202 controls the aural information providing unit 240 so as to output "Follow-up traveling is performed" by voice after a sound effect "poon". Incidentally, in order to form the display mode relating to the notification content of the aural information providing unit 240, the control unit 202 controls the display part 101 to change the display mode of "during decelerated traveling" in the display part 101 in Fig. 3(a) to the display mode of "during follow-up traveling".

By this, the user (especially the driver) can aurally recognize the vehicle traveling state at the time of the auto-cruise traveling (eyes free). Incidentally, here, the viewing information is also used by the display part 101.

Fig. 3(b) shows a case where the preceding vehicle changes the lane at the time of the auto-cruise traveling. When a signal indicating that the preceding vehicle changes the lane is inputted from the traveling control device 225 through the multiplex communication line 230 and the multiplex communication input/output terminal 213, the control unit 202 controls the aural information providing unit 240 so as to output "Preceding vehicle changes the lane" after a sound effect "poon". Next, a signal indicating that the vehicle is accelerated up to the set speed is inputted from the traveling control device 225 through the multiplex communication line 230 and the multiplex communication input/output terminal 213, the control unit 202 controls the aural information providing unit 240 so as to output "Accelerated traveling is performed up to the set speed" by voice. After that, when a signal indicating that the vehicle performs constant speed traveling at the set speed is inputted through the multiplex communication line 230 and the multiplex communication input/output terminal 213, the control unit 202 controls the aural information providing unit 240 so as to output "Traveling is performed at the set speed" by voice after a sound effect "poon". Incidentally, here, the visual information is also used by the display part 101.

Fig. 3(c) shows an approaching warning of the preceding vehicle at the time of the auto-cruise traveling. When a signal indicating that the preceding vehicle is approaching is inputted from the traveling control device 225 through the multiplex communication line 230 and the multiplex communication input/output terminal 213, the control unit 202 controls the aural information providing unit 240 so as to output "Approaching the preceding vehicle. Please perform brake operation" by voice after a sound effect "pi pi pi". Incidentally, here, the visual information is also used by the display part 101.

Fig. 3(d) shows a lane deviation warning at the time of lane-keep traveling. When a signal indicating that there is a fear of lane deviation is inputted at the time of the lane-keep traveling from the traveling control device 225 through the multiplex communication line 230 and the multiplex communication input/output terminal 213, the control unit 202 controls the aural information providing unit 240 so as to output "There is fear of lane deviation. Please perform steering operation" by voice after a sound effect "pi pi pi". Incidentally, here, the visual information is also used by the display part 101.

Fig. 3(e) shows a case where auto-cruise traveling is set. When a signal indicating that the traveling control device 225 is shifted to the auto-cruise system in accordance with a specified input of the operation unit 226 is inputted through the multiplex communication line 230 and the multiplex communication input/output terminal 213, the control unit 202 controls the aural information providing unit 240 so as to output, as the answerback, "Auto-cruise traveling system is activated" by voice after a sound effect "poon". Next, when a signal to request a set speed is inputted from the traveling control device 225 through the multiplex communication line 230 and the multiplex communication input/output terminal 213, the control unit 202 controls the aural information providing unit 240 so as to output, as the guidance, "Please set vehicle speed" by voice.

By this, the user (especially the driver) can confirm the operation at the time of the auto-cruise traveling and can recognize a next required operation aurally by the aural information providing unit 240 (eyes free). Incidentally, here, the visual information is also used through the display part 101.

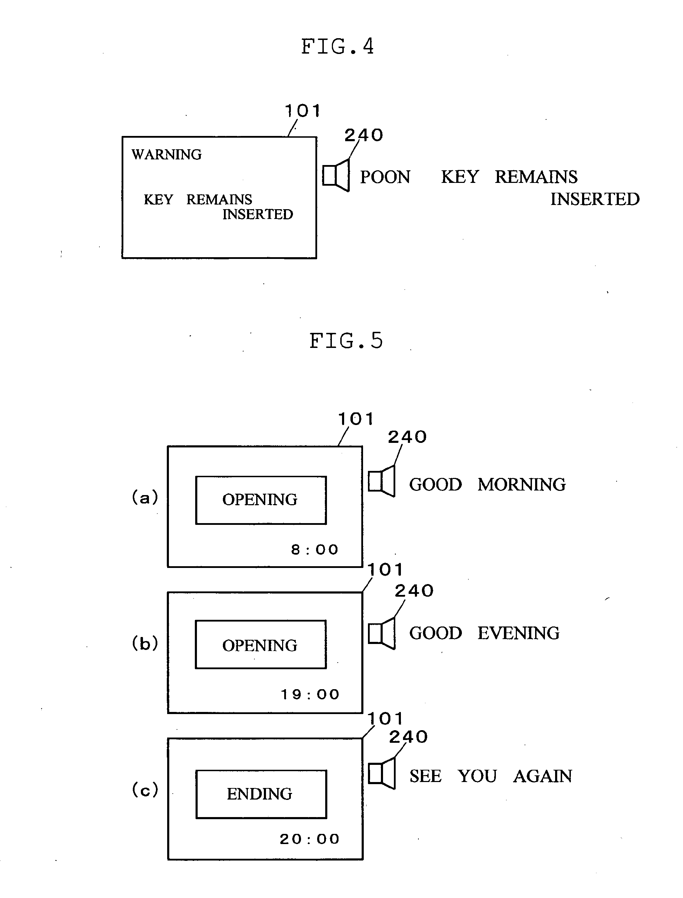

Next, the operation of the control unit 202 at the time of input of warning information will be described by use of Fig. 4. The control unit 202 obtains the information relating to the vehicle from the vehicle information terminal 212 and the multiplex communication input/output terminal 213 that perform the input/output of the vehicle information, and judges, based on this information, whether or not there is an occurrence condition of a warning. Here, when the occurrence condition of the warning is detected, the warning information is notified by a sound effect and a voice through the aural information providing unit 240, and the display mode relating to the warning information is displayed by the display part 101.

Fig. 4 shows a specific example thereof, and when a signal indicating that forgetting to pull out an ignition key is detected at the time when the door is opened is inputted through the vehicle information terminal 212 or the multiplex communication input/output terminal 213, the control unit 202 controls the aural information providing unit 240 so as to output "Key remains inserted" by voice after a sound effect "poon". Incidentally, here, the visual information is also used through the display part 101.

By this, the user (especially the driver) can accurately recognize the warning content. Besides, since the visual information is also used, even if he/she fails to hear the voice output, it becomes possible to certainly make the recognition.

Next, the operation of the control unit 202 at the time of opening/ending will be described by use of Fig. 5. The control unit 202 obtains information relating to the vehicle from the vehicle information terminal 212 and the multiplex communication input/output terminal 213 that perform the input/output of the vehicle information, and judges, based on this information, whether or not there is an occurrence condition of the opening/ending. Here, when the occurrence condition of the opening/ending time is detected, time information of the time information getting unit (electric wave clock) 208 is read, the opening/ending corresponding to the time information is notified through the aural information providing unit 240, and the display mode relating to the opening/ending is displayed by the display part 101.

Figs. 5(a) to 5(c) show specific examples thereof, and Figs. 5(a) and 5(b) show opening examples in the case where it is detected that the door is open. The control unit 202 controls the aural information providing unit 240 to switch between "good morning" and "good evening" by voice based on the time information from the time information getting unit 208. Incidentally, here, the visual information is also used through the display part 101.

By this, it becomes possible to provide the opening friendly to the user. Besides, since the time information getting unit 208 uses the electric wave clock, it is unnecessary for the user to correct the clock, and it becomes possible to make a time judgment based on accurate time.

Fig. 5 (c) shows an ending example in the case where engine stop is detected. The control unit 202 controls the aural information providing unit 240 so as to output "See you again" by voice. Incidentally, the visual information is also used by the display part 101.

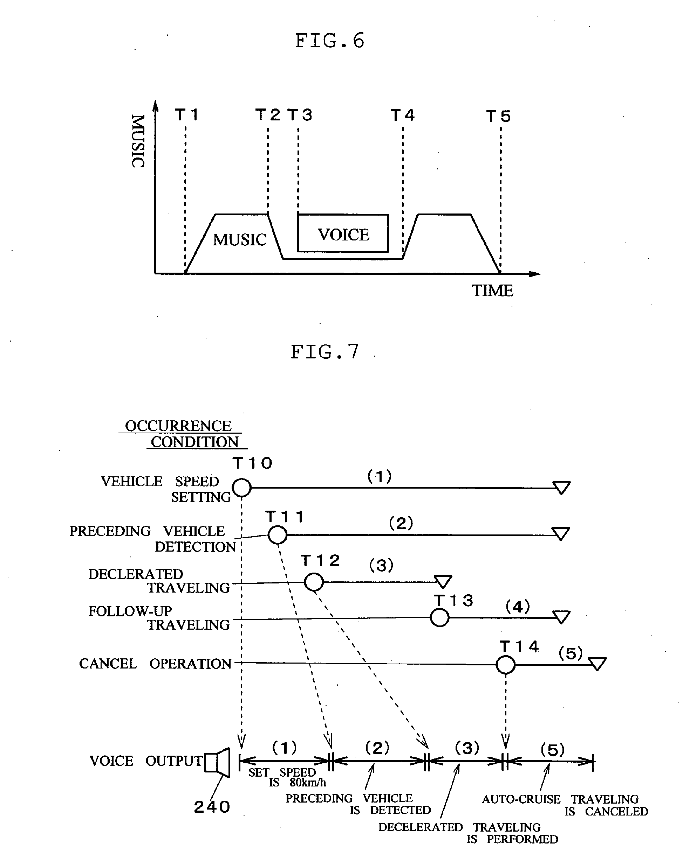

Fig. 6 shows a mixing example of a voice and a music at the time of the opening/ending. When detecting an opening/ending occurrence condition at time T1, the control unit 202 initiates music output, reduces the music output at time T2, mixes a voice with the music at time T3, completes the voice output at time T4 to return the music output to the original, and ends the music output at time T5.

By this, it becomes possible to provide the opening more friendly to the user. Incidentally, here, although the mixing is used for the opening/ending, limitation is not made to this. For example, it is needless to say that at the time of occurrence of a warning condition, the mixing processing is used for two kinds of sound effects (different in frequency) and the sounds can be simultaneously given.

Figs. 7 to 12 show processing examples of the control unit 202 when occurrence conditions of aural information overlap.

Fig. 7 shows an example at the time of auto-cruise traveling. When a signal indicating that speed setting is performed is inputted at time T10 from the traveling control device 225 through the multiplex communication line 230 and the multiplex communication input/output terminal 213, the control unit 202 controls the aural information providing unit 240 so as to output voice (1) "Set vehicle speed is 80 km/h". When a signal indicating that the preceding vehicle is detected is inputted at time T11 in the middle of the output from the traveling control device 225 through the multiplex communication line 230 and the multiplex communication input/output terminal 213, the control unit 202 controls the aural information providing unit 240 so as to output voice (2) "Preceding vehicle is detected" after the output of the voice (1) is completed. Besides, when a signal indicating that the preceding vehicle performs decelerated traveling is inputted at time T12 from the traveling control device 225 through the multiplex communication line 230 and the multiplex communication input/output terminal 213, the control unit 202 controls the aural information providing unit 240 so as to output voice (3) "Decelerated traveling is performed" after the output of the voices (1) and (2) is completed. Next, when a signal indicating that follow-up traveling of the preceding vehicle is performed is inputted at time T13 from the traveling control device 225, the control unit 202 controls the aural information providing unit 240 so as to output voice (4) "Follow-up traveling is performed" after the output of the voices (1), (2) and (3) is completed. However, when a signal indicating that the auto-cruise traveling is cancelled by the user is inputted at time T14 from the traveling control device 225 through the multiplex communication line 230 and the multiplex communication input/output terminal 213, the control unit 202 does not perform the output processing of the voice (4) in the state where the output processing is not ended, that is, the voice (4) in the stand-by state, or stops the output processing of the voice (4) during the output processing, and controls the aural information providing unit 240 so as to output voice (5) "Auto-cruise is cancelled".

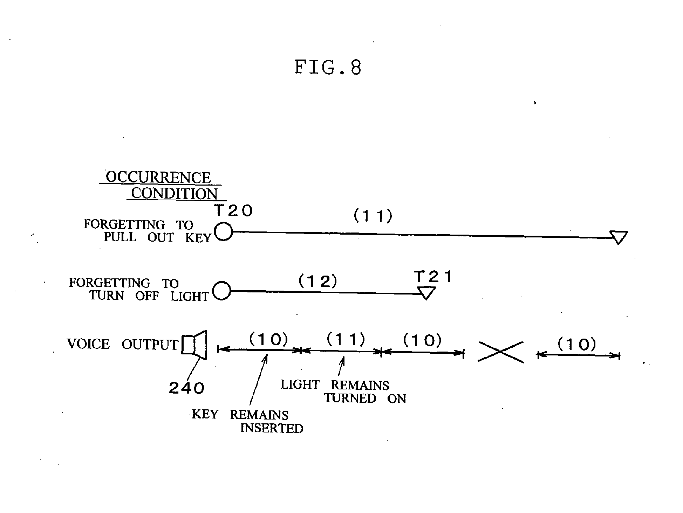

Fig. 8 shows a first processing at the time of occurrence of warning information. When respective signals indicating two warning informations as vehicle informations, that is, the warning information of forgetting to pull out the key and the warning information of forgetting to turn off the light are inputted at time T20 through the vehicle information terminal 212, the control unit 202 controls the aural information providing unit 240 so as to output and repeat voice (10) "Key remains inserted" and voice (11) "Light remains turned on" alternately. Besides, when a signal indicating that the warning information of forgetting to turn off the light is cancelled is inputted at time T21 through the vehicle information terminal 212, the control unit 202 stops the output processing of the voice (11) and repeatedly performs only the output processing of the voice (10).

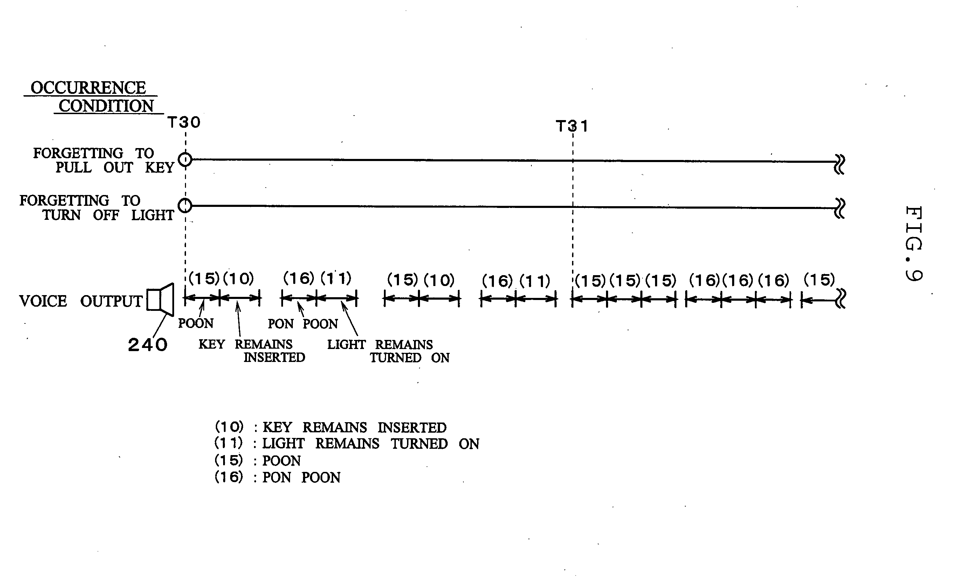

Fig. 9 shows a second processing at the time of occurrence of warning information. When respective signals indicating two warning formations as vehicle informations, that is, the warning information of forgetting to pull out the key and the warning information of forgetting to turn off the light are inputted at time T30 through the vehicle information terminal 212, the control unit 202 controls the aural information providing unit 240 so as to repeat voice (10) "Key remains inserted" after sound effect (15) "poon" and the voice (11) "Light remains turned on" after sound effect (16) "pon poon" alternately twice in accordance with the previously determined priority order. When the two warning formations are continuously inputted at time T31, after this, the control unit 202 controls the aural information providing unit 240 so as to alternately repeat the sound effect (15) and the sound effect (16).

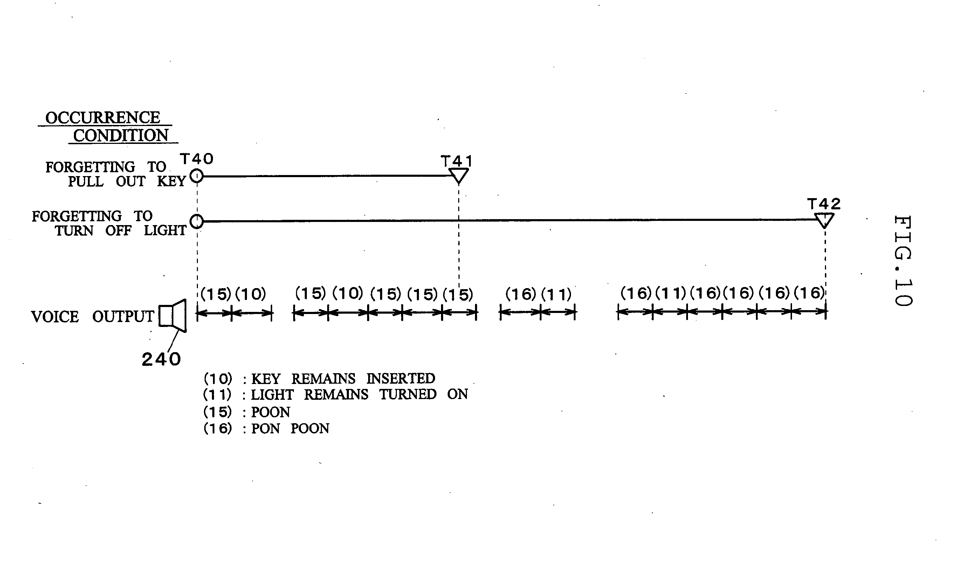

Fig. 10 shows a third processing at the time of occurrence of warning information. When respective signals indicating two warning informations as vehicle informations, that is, the warning information of forgetting to pull out the key and the warning information of forgetting to turn off the light are inputted at time T40 through the vehicle information terminal 212, the control unit 202 controls the aural information providing unit 240 so as to repeat voice (10) "Key remains inserted" after sound effect (15) "pone" twice at specified intervals in accordance with the previously determined priority order, and so as to subsequently continuously output only the sound effect (15). When a signal indicating that the warning information of forgetting to pull out the key is cancelled is inputted at time T41 through the vehicle information terminal 212, the control unit 202 completes the output processing of the sound effect (15) and the voice (10), and controls the aural information providing unit 240 so as to repeat sound effect (16) "pon poon" and voice (11) "Light remains turned on" twice at specified intervals, and so as to subsequently continuously output only the sound effect (16). Incidentally, when a signal indicating that the warning information of forgetting to turn off the light is cancelled is inputted at time T42 through the vehicle information terminal 212, the control unit 202 completes the output processing of the sound effect (16).

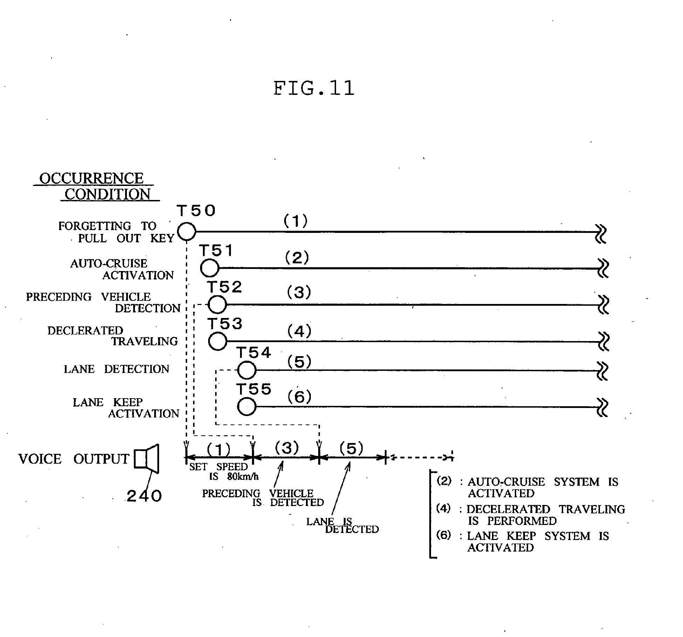

Fig. 11 shows a priority processing at the time of auto-cruise traveling and lane-keep traveling. When a signal indicating that speed setting is performed is inputted at time T50 from the traveling control device 225 through the multiplex communication line 230 and the multiplex communication input/output terminal 213, the control unit 202 controls the aural information providing unit 240 so as to output voice (1) "Set speed is 80 km/h". In the case where the output conditions of voice (2) "Auto-cruise traveling system is activated" at time T51, voice (3) "Preceding vehicle is detected" at time T52, voice (4) "Decelerated traveling is performed" at time T53, and voice (5) "Lane is detected" at time T54 continuously occur in the middle of this output processing, the control unit 202 controls the aural information providing unit 240 to leave the information important in the safety of traveling (information having high priority), that is, the voice (3) "Preceding vehicle is detected" and the voice (5) "Lane is detected" as they are, and omits the other voices (2), (4) and (6). In this processing, when the plural informations (1), (2), (3), (4) and (5) are sequentially notified in accordance with priority order, in the case where the number of informations not notified and being on the waiting list is larger than a specified number (for example, 5), a specified number (for example, 2) of informations having high priority (high importance) are left as they are, and the notification operation of the other informations is omitted, and the overlapping various informations are not continuously notified, and accordingly, it is possible to prevent the user from feeling annoyance. That is, in other words, the control unit 202 performs the simplifying processing for the notification operation of the overlapping various informations, so that the user can easily recognize only the information having high priority.

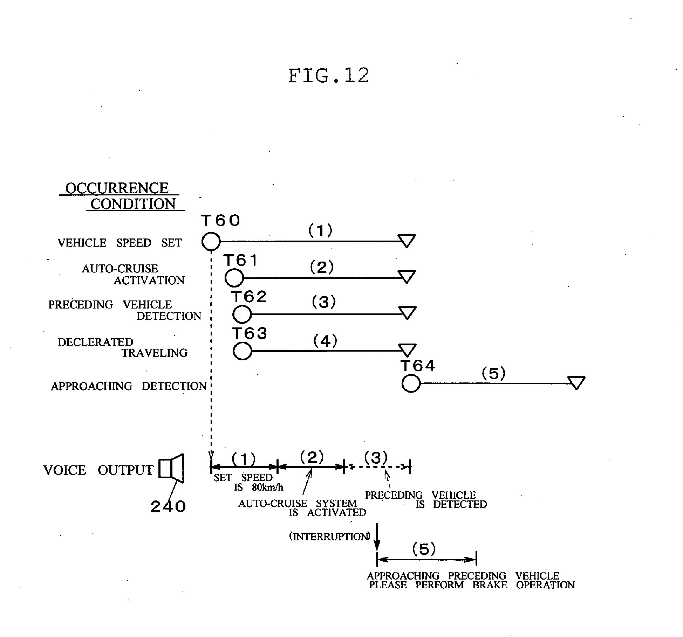

Fig. 12 shows a processing in a case having urgency at the time of auto-cruise traveling. When a signal indicating that vehicle speed setting is performed is inputted at time T60 from the traveling control device 225 through the multiplex communication line 230 and the multiplex communication input/output terminal 213, the control unit 202 controls the aural information providing unit 240 so as to output voice (1) "Set speed is 80 km/h". When a signal indicating that auto-cruise traveling is performed is inputted at time T61 from the traveling control device 225 in the middle of the output through the multiplex communication line 230 and the multiplex communication input/output terminal 213, the control unit 202 controls the aural information providing unit 240 so as to output voice (2) "Auto-cruise traveling system is activated" after the output processing of the voice (1) is completed. When a signal indicating that the preceding vehicle is detected is inputted at time T62 from the traveling control device 225 through the multiplex communication line 230 and the multiplex communication input/output terminal 213, the control unit 202 controls the aural information providing unit 240 so as to output voice (3) "Preceding vehicle is detected" after the output processing of the voices (1) and (2) is completed. Next, a signal indicating that the preceding vehicle performs decelerated traveling is inputted at time T63 from the traveling control device 225 through the multiplex communication line 230 and the multiplex communication input/output terminal 213, the control unit 202 is in a standby state for performing the output processing of voice (4) "Decelerated traveling is performed" after the output processing of the voices (1), (2) and (3) is completed. However, when a signal indicating that approaching the preceding vehicle is detected, which requires urgency, is inputted at time T64 from the traveling control device 225 through the multiplex communication line 230 and the multiplex communication input/output terminal 213, the control unit 202 performs an interrupt processing even in the output processing of the voice (3), and controls the aural information providing unit 240 so as to output voice (5) "Approaching the preceding vehicle. Please perform brake operation".

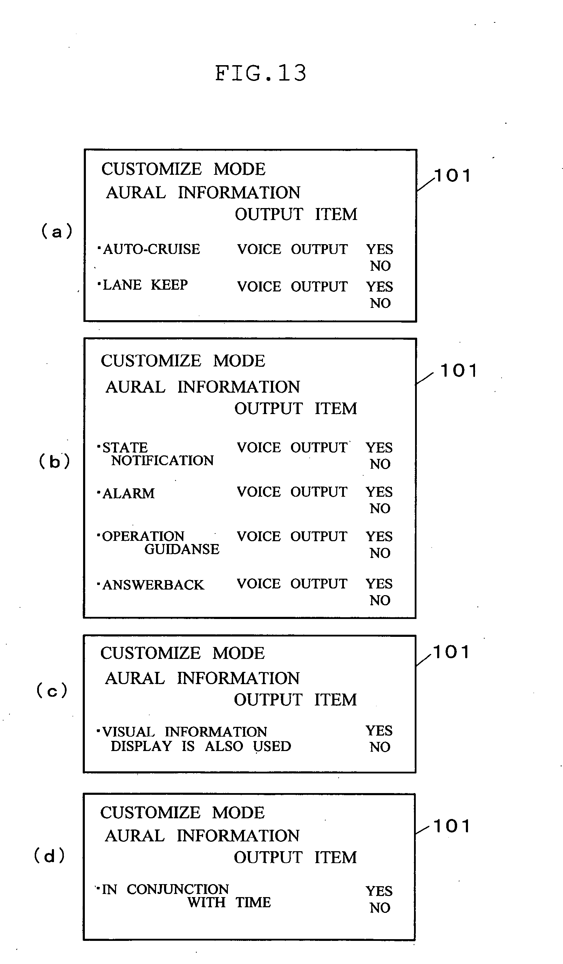

Next, a customize function in the control unit 202 will be described by use of Fig. 13. The user of the vehicle operates the customize mode setting unit 210 from the outside and gives an instruction to make a shift to a customize mode (function) which the control unit 202 previously has. Specifically, this is performed by changing the terminal whose normal potential is at a high level to a low level by a switch or the like. When the shift to the customize mode is made, the control unit 202 changes the display part 101 from a normal display to a customize setting mode initial screen through the drive unit 205. Here, the user registers various setting contents relating to the aural information output through the input unit 211. The customize setting can be performed for each user of the vehicle, and the setting contents are stored in the second storage unit 204 for each user. Then the setting contents are automatically read based on the specific information from the keyless entry device 220 as the user identification unit.

Figs. 13(a) to 13(d) show specific customize contents of aural information output items from the aural information providing unit 240. Fig. 13(a) shows a screen on which it is possible to select whether or not voice output is used in auto-cruise traveling/lane-keep traveling. Besides, Fig. 13 (b) shows a screen on which it is possible to select whether or not voice output is used in the state notification of auto-cruise traveling/lane-keep traveling, warning, guidance of an operation, answerback, and the like. Fig. 13(c) shows a screen on which it is selected whether or not visual information is also used by the display part 101 at the time of voice output of the alarm information. Fig. 13(d) shows a screen on which it is selected whether or not cooperating with the time is performed at the time of voice output of opening/ending.

The information providing apparatus 100 for the vehicle includes the control unit 202 that inputs the traveling information relating to the automatic traveling of the vehicle and the operation information relating to the automatic traveling for the user through the vehicle information terminal 213 or the multiplex communication input/output terminal 214, and activates the aural information providing unit 240 to notify at least one state of the vehicle state relating to the automatic traveling, the warning relating to the automatic traveling, the guidance of the operation relating to the automatic traveling, and the answerback of the operation relating to the automatic traveling. Besides, the control unit 202 notifies various informations by using the aural information providing unit 240 and by voice. Besides, the control unit 202 causes the display part 101 as the visual information providing unit to perform the display operation in conjunction with the aural information providing unit 240.

Thus, the state notification of the vehicle of the auto-cruise traveling/lane-keep traveling and the warning output are outputted by voice, so that it is possible to reduce the movement of the line of sight of the user for visually seeing the display part 101 during the driving, and accordingly, the information providing apparatus for the vehicle which contributes to the safety driving can be obtained. Further, the guidance relating to the operation of the auto-cruise traveling/lane-keep traveling and the answerback are outputted by voice, so that the operability for the user can be improved. Besides, the visual information, together with the aural information, is used by the display part 101, so that the user can certainly make the recognition, and the convenience can be improved.

Besides, the control unit 202 uses the aural information providing unit 240 to notify various informations by the combination of the voice and the sound effect. Besides, the control unit 202 activates the aural information providing unit 240 so as to give the sound effect according to various states of the guidance, warning, answerback and the like, and changes the sound effect for each of the various states.

Accordingly, since the sound effect is used, it is possible to deal with the change of aural characteristics of the user by aging (in general, since the sound effect uses a frequency band of 1 to 2 KHz, the frequency is easy for the user to hear), and since the sound effect is changed according to the various states, it becomes easy for the user to make the recognition, and the convenience can be improved.

Besides, the control unit 202 inputs the vehicle information through the vehicle information terminal 212 or the multiplex communication input/output terminal 213, activates the aural information providing unit 240 for at least the warning content (alarm, warning) in the vehicle information by the combination of the sound effect and the voice, and changes the sound effect for each warning content, and therefore, the user can certainly make the recognition, and the convenience can be improved. Besides, the control unit 202 uses the visual information by the display part 101 as well as the aural information, so that the user can certainly recognize the warning content.

Besides, since the control unit 202 repeatedly activates the aural information providing unit 240 for the warning content by the combination of the sound effect and the voice, and activates the aural information providing unit 240 by only the sound effect in the repeated operation after a specified number of times, the voice is not repeated after the user understands the warning content, and therefore, annoyance caused according to the individual difference of the user is eliminated, and the convenience can be more improved.

Besides, the control unit 202 inputs the vehicle information through the vehicle information terminal 212 or the multiplex input/output terminal 213, and activates the aural information providing unit 240 so as to notify the content at the time of the opening or ending, and it becomes possible to provide the representation friendly to the user.

Besides, when the control unit 202 activates the aural information providing unit 240 to notify the content of the opening or ending, the mixing of the voice and the music is performed in the opening or the ending, and the time information is added to the content to change the content of the opening or the ending, and therefore, it becomes possible to provide the representation more friendly to the user. Besides, since the electric wave clock or GPS is used as the time information getting unit, it is unnecessary for the user to correct the clock, the time judgment is can be made based on the accurate time, and the convenience is further improved.

Besides, when the control unit 202 activates the aural information providing unit 240 to notify various informations, in the case where the audio 223 is operated in a normal state, the mute processing to reduce the output processing of the audio 223 is performed, so that the user can certainly hear various informations.

Besides, when plural conditions for aural notification are inputted through the vehicle information terminal 212 or the multiplex communication input/output terminal 213, the control unit 202 activates the aural information providing unit 240 so as to sequentially notify the various informations in the previously determined descending order of priority, and the information is notified in accordance with the priority, and therefore, it becomes possible to sequentially inform the user of the information in the descending order of importance.

Besides, at the time when the information is sequentially notified in the descending order of priority, when the signal indicating that information not notified and on the waiting list is cancelled is inputted through the vehicle information terminal 212 or the multiplex communication input/output terminal 213, the control unit 202 cancels the notification operation of the content corresponding to the signal, and does not notify the information whose occurrence condition is cancelled, and therefore, the user does not feel an unpleasant feeling, and the convenience is further improved.

Besides, at the time when plural informations are sequentially notified in accordance with the priority, in the case where the number of informations not notified and on the waiting list is larger than a specified number, the control unit 202 leaves a specified number of informations having high priority as they are, and omits the notification operation of the other information, and the various informations having low priority are not continuously notified, and therefore, it is possible to prevent the user from feeling annoyance.

Besides, at the time when plural informations are sequentially notified in accordance with the priority, when the information requiring urgency is inputted through the vehicle information terminal 212 or the multiplex communication input/output terminal 213, the control unit 202 forces the information requiring the urgency into the informations not notified and on the waiting list, and causes the information requiring the urgency to be notified with priority by the aural information providing unit 240, and the safety in vehicle traveling can be improved.

Besides, the control unit 202 has the customize mode to register various settings of the aural information providing unit 240, and includes the input unit 211 to determine the contents of the various settings and the second storage unit 204 to register the contents of the various settings, and accordingly, the contents of the various settings can be customized, and the information providing apparatus 100 for the vehicle according to the user's preference can be obtained.

### [Industrial Applicability]

The invention relates to the information providing apparatus for the vehicle using the aural information providing unit, and can be applied to not only a vehicle display apparatus to provide vehicle information, but also a vehicle information providing apparatus, such as an audio apparatus, a navigation apparatus or a multi-display apparatus, mounted in the vehicle.

## Claims

1. An information providing apparatus for a vehicle comprising an aural information providing unit to aurally notify various states of a vehicle, **characterized by** comprising:
a control unit that inputs traveling information relating to automatic traveling of the vehicle and operation information relating to the automatic traveling for a user through at least one of a vehicle information terminal and a multiplex communication input/output unit, and activates the aural information providing unit to notify at least one state of a vehicle state relating to the automatic traveling, a warning relating to the automatic traveling, a guidance of an operation relating to the automatic traveling, and an answerback of the operation relating to the automatic traveling.

2. The information providing apparatus for the vehicle as recited in claim 1, **characterized in that** there is provided a visual information providing unit to visually display the various states of the vehicle, and the control unit causes a display mode relating to notification content of the aural information providing unit to be displayed by the visual information providing unit.

3. The information providing apparatus for the vehicle as recited in claim 1, **characterized in that** the control unit uses the aural information providing unit to send a notification by voice.

4. The information providing apparatus for the vehicle as recited in claim 1, **characterized in that** the control unit uses the aural information providing unit to send a notification by a combination of voice and a sound effect.

5. The information providing apparatus for the vehicle as recited in claim 4, **characterized in that** the control unit activates the aural information providing unit to give the sound effect according to the various states of the guidance, the warning and the answerback, and changes the sound effect for each of the various states.

6. An information providing apparatus for a vehicle comprising an aural information providing unit to aurally notify various states of a vehicle, **characterized in that**
the control unit inputs information of the vehicle through at least one of a vehicle information terminal and a multiplex communication input/output unit, activates the aural information providing unit for at least warning contents in the information by a combination of a sound effect and a voice, and changes the sound effect for each of the warning contents.

7. The information providing apparatus for the vehicle as recited in claim 6, **characterized in that** the control unit repeatedly activates the aural information providing unit for the warning contents by the combination of the sound effect and the voice, and activates the aural information providing unit by only the sound effect in the repeated operation after a specified number of times.

8. An information providing apparatus for a vehicle comprising an aural information providing unit to aurally notify various states of a vehicle, **characterized by** comprising:
a control unit that inputs information of the vehicle through at least one of a vehicle information terminal and a multiplex communication input/output unit, and activates the aural information providing unit to notify content of at least one of an opening and an ending based on the information.

9. The information providing apparatus for the vehicle as recited in claim 8, **characterized in that** the control unit activates the aural information providing unit by mixing of voice and music.

10. The information providing apparatus for the vehicle as recited in claim 6 or 8, **characterized in that** the control unit activates the visual information providing unit as well as the aural information providing unit.

11. An information providing apparatus for a vehicle comprising a visual information providing unit to visually display various states of a vehicle, an aural information providing unit to aurally notify the various states, and a control unit to control the visual information providing unit and the aural information providing unit, **characterized in that**
the control unit inputs information of the vehicle through at least one of a vehicle information terminal and a multiplex communication input/output unit, activates the aural information providing unit about at least information relating to warning content in the information, and activates the visual information providing unit as well as the aural information providing unit.

12. The information providing apparatus for the vehicle as recited in any one of claims 1, 6, 8 and 11, **characterized in that** there is provided a time information getting unit to get time information, and the control unit inputs the time information, and notifies information corresponding to the time information by the aural information providing unit.

13. The information providing apparatus for the vehicle as recited in claim 12, **characterized in that** the time information getting unit includes an electric wave clock or a GPS.

14. The information providing apparatus for the vehicle as recited in any one of claims 1, 6, 8 and 11, **characterized in that** when activating the aural information providing unit, the control unit outputs an instruction signal to reduce output of an audio device mounted in the vehicle through at least one of the vehicle information terminal and the multiplex communication input/output terminal.

15. The information providing apparatus for the vehicle as recited in any one of claims 1, 6, 8 and 11, **characterized in that** when detecting plural conditions for aural notification through at least one of the vehicle information terminal and the multiplex communication input/output terminal, the control unit activates the aural information providing unit to sequentially notify respective information corresponding to the respective conditions in a previously determined descending order of priority.

16. The information providing apparatus for the vehicle as recited in 15, **characterized in that** when a signal indicating that information on a waiting list is cancelled is inputted through at least one of the vehicle information terminal and the multiplex communication input/output terminal at the time when the informations are sequentially notified in the descending order of priority, the control unit cancels a notification operation of the information corresponding to the signal.

17. The information providing apparatus for the vehicle as recited in claim 15 or 16, **characterized in that** when the plural informations are sequentially notified in accordance with the priority, in the case where the number of information not notified and being on a waiting list is larger than a specified number, the control unit leaves a specified number of information having high priority as they are and omits a notification operation of the other information.

18. The information providing apparatus for the vehicle as recited in any one of claims 15, 16 and 17, **characterized in that** when information requiring urgency is inputted through at least one of the vehicle information terminal and the multiplex communication input/output terminal at the time when the plural informations are sequentially notified in accordance with the priority, the control unit forces the information requiring the urgency into the information not notified and being on a waiting list, and causes the information requiring the urgency to be notified with priority by the aural information providing unit.

19. The information providing apparatus for the vehicle as recited in any one of claims 1, 6, 8 and 11, **characterized in that** the control unit has a customize mode to register various settings of the aural information providing unit, and includes an input unit to determine contents of the various settings in the customize mode, and a storage unit to register the contents of the various settings.
